Europäisches Patentamt

European Patent Office

Office européen des brevets

(19)

(11) Veröffentlichungsnummer: **0 282 812**
**A2**

(12) **EUROPÄISCHE PATENTANMELDUNG**

(21) Anmeldenummer: 88103124.9

(22) Anmeldetag: 02.03.88

(51) Int. Cl.⁴: **A01C 17/00** , A01C 15/04

(30) Priorität: 11.03.87 DE 3707739

(43) Veröffentlichungstag der Anmeldung:
21.09.88 Patentblatt 88/38

(84) Benannte Vertragsstaaten:
DE FR GB NL SE

(71) Anmelder: Amazonen-Werke H. Dreyer GmbH
& Co. KG
Am Amazonenwerk 9-13
D-4507 Hasbergen-Gaste(DE)

(72) Erfinder: Dreyer, Heinz, Dipl.-Ing.Univ.Dr.agr.
Am Amazonenwerk 7 ·
D-4507 Hasbergen(DE)
Erfinder: Scheufler, Bernd, Dr.
Am Amazonenwerk 101
D-4507 Hasbergen(DE)

(54) **Hydraulikanlage für den Antrieb eines Sägerätes.**

(57) Hydraulikanlage für den Antrieb eines Streugerätes, insbesondere eines landwirtschaftlichen Düngerstreuers, mit einer von der Zapfwelle des Ackerschleppers angetriebenen Ölpumpe, die zumindest zwei unabhängig voneinander arbeitende und regelbare Ölmotore antreibt, die die Verteilorgane, wie beispielsweise Wurforgane oder Gebläse und den Dosiermechanismus antreiben, wobei die Ölmotore von einstellbaren Stromregelventilen und/oder Stromteilerventilen jeweils unabhängig voneinander regelbar sind. Um, die bekannten Hydraulikanlagen wesentlich zu verbessern, vorzugsweise auch in einfacher Weise die Hydraulikanlage sehr - schnell bei kalten Außentemperaturen einsatzfähig zu machen, ist vorgesehen, daß hinter dem(en) Stromteilerventil(en) zumindest zwei Ölmotore angeordnet sind, daß an jedem Ausgang des Stromteilerventils zumindest ein Ölmotor angeschlossen ist, und daß jeder Ölmotor ein Dosierorgan oder eine Gruppe von Dosierorganen antreibt.

## Hydraulikanlage für den Antrieb eines Streugerätes

Die Erfindung betrifft eine Hydraulikanlage für den Antrieb von Streugeräten gemäß des Oberbegriffes des Anspruches 1.

Derartige Hydraulikanlagen für den Antrieb von landwirtschaftlichen Düngerstreuern sind bereits durch die Zeitschriften "Ölhydraulik und Pneumatik" 24 (1980) Nr.11 Seite 817 und "Grundlagen der Landtechnik" Band 31 (1981) Nr. 6 Seite 211 bekannt. In diesen Zeitschriften werden jeweils hydrostatische Antriebssysteme für das Antriebs- und Dosiersystem von Schleuderdüngerstreuern aufgezeigt. Mit Hilfe dieser hydrostatischen Antriebssysteme ist es möglich, die Schleuderscheiben von Schleuderdüngerstreuern derart anzutreiben, daß die Nenndrehzahl der Schleuderscheiben auch beim Absenken der Motordrehzahl des den Schleuderdüngerstreuer tragenden Ackerschleppers konstant gehalten wird und demzufolge ein optimales Streubild unabhängig von der Fahrgeschwindigkeit gewährleistet ist. Die Zuführung des Mineraldüngers auf die Schleuderscheiben erfolgt über hydraulisch angetriebene Dosierorgane, wobei die Zuführmenge proportional der zurückgelegten Wegstrecke ist.

Diese bekannten hydrostatischen Antriebssysteme weisen jedoch den Nachteil auf, daß sie in den ersten Minuten nach dem Einschalten der die Ölpumpe antreibenden Zapfwelle des Ackerschleppers, bedingt durch das kalte, zähflüssige Hydrauliköl, sehr verschleißbehaftet sind. Alle Bauteile dieser hydrostatischen Antriebssysteme unterliegen in diesem Stadium einem sehr hohen Verschleiß durch den hohen Reibungswiderstand des noch kalten Öles. Kaltes Hydrauliköl besitzt zudem sehr schlechte Verschleißschutzeigenschaften. Bevor mit dem Ausbringen von Düngemitteln begonnen werden kann, müssen die hydrostatischen Antriebssysteme erst warm gefahren werden, bis das Öl seine optimale Betriebstemperatur von ca. 80° erreicht hat. Erst wenn das Öl seine Betriebstemperatur erreicht hat, werden die Antriebs- und Dosierorgane in gewünschter Weise angetrieben, d.h. beispielsweise, daß die Schleuderscheiben und die Dosierorgane mit der jeweils erforderlichen Drehzhal angetrieben werden.

Des weiteren ist durch den Prospekt "Rauch Pneumatikdüngerstreuer AERO" mit dem Druckvermerk "A511K-B + K1", der auf der DLG-Ausstellung im Mai 1986 verteilt wurde, ein Pneumatikdüngerstreuer bekannt, wobei der Antrieb der Dosierorgane über einen Hydraulikmotor und der Antrieb des Gebläses über eine bordeigene Hydraulikanlage erfolgt. Der die Dosierorgane antreibende Hydraulikmotor ist hierbei mit dem Hydrauliksystem des den Pneumatikdüngerstreuer transportierenden Ackerschleppers verbunden, wobei die bordeigene Hydraulikanlage von der Zapfwelle des Ackerschleppers angetrieben wird.

Diese bordeigene Hydraulikanlage für den Gebläseantrieb des Pneumatikdüngerstreuers ist mit den gleichen Nachteilen behaftet, wie der vorabbeschriebene Schleuderdüngerstreuer, wenn sich das Hydrauliköl dieser Anlage noch im kalten Zustand befindet. In der diesem Pneumatikdüngerstreuer zugehörigen Betriebsanleitung rät der Hersteller dieses Pneumatikdüngerstreuers, das Hydrauliköl der bordeigenen Hydraulikanlage, besonders bei tiefen Temperaturen, einige Minuten bei niedriger Zapfwellendrehzahl warm laufen zu lassen, da das Gebläse sonst trotz richtiger Zapfwellendrehzahl noch nicht die notwendige Gebläsedrehzahl erreicht, wodurch es zu einer Verstopfungsgefahr der Rohrleitungen bzw. zu einer ungleichmäßigen Düngerverteilung kommen kann. Erst nach Erreichen der vorgeschiebenen Betriebstemperatur wird das Gebläse in gewünschter Weise angetrieben, so daß ein störungsfreier Transport des den Rohrleitungen zugeführten Düngers durch den vom Gebläse erzeugten Luftstrom gewährleistet ist. Dieses Warmfahren des Hydrauliköls kann einen sehr hohen Verschleiß der bordeigenen Hydraulikanlage des Pneumatikdüngerstreuers zur Folge haben, wenn der Landwirt die Anweisungen nicht genau beachtet.

Der Erfindung liegt daher die Aufgabe zugrunde, die bekannten Hydraulikanlagen wesentlich zu verbessern, vorzugsweise auch in einfacher Weise die Hydraulikanlage sehr schnell bei kalten Außentemperaturen einsatzfähig zu machen.

Diese Aufgabe wird in erfindungsgemäßer Weise dadurch gelöst, daß hinter dem(n) Stromteilerventil(en) zumindest zwei Ölmotore angeordnet sind, daß an jedem Ausgang des Stromteilerventils zumindest ein Ölmotor angeschlossen ist, und daß jeder Ölmotor ein Dosierorgan oder eine Gruppe von Dosierorganen antreibt. Infolge dieser Maßnahmen lassen sich mehrere, jeweils von den Ölmtoren angetriebene Antriebs-oder Dosiersysteme einzeln antreiben. Des weiteren ist in erfindungsgemäßer Weise vorgesehen, daß der vor dem(n) Stromregelventil(en) oder dem(n) Stromteilerventil(en) angeordnete(n) Ölmotor(e) zumindest ein Gebläse antreibt. Hierdurch läßt sich der Antrieb des einem Pneumatikdüngerstreuer zugeordneten Gebläses - zur Erzeugung eines zum Verteilen des Materials benötigten Luftstromes - und der Dosierorgane wesentlich verbessern, da jetzt sowohl das Gebläse als auch die Dosierorgane von dem bordeigenen Hydrauliksystem des Pneumatikdüngerstreuers angetrieben werden können. Somit erfolgt der Antrieb für das Gebläse und der Dosierelemente unabhängig vom Hydrauliksystem des Schleppers, so daß die Hydrauliksiecker am Schlepper frei werden und für die Verteilergestängebetätigung genutzt werden können. Des weiteren ist der so entstehende geschlossene Hydraulikkreislauf vor Verschmutzungen geschützt.

In einer weiteren Ausführungsform ist in erfindungsgemäßer Weise vorgesehen, daß zwischen dem ersten Stromregelventil und dem Stromteilerventil zumindest ein Ölmotor angeordnet ist, der zwei oder mehrere Schleuderscheiben antreibt. Somit werden die Schleuderscheiben eines Schleuderdüngerstreuers alle mit der gleichen, konstanten Drehzahl angetrieben. Da die Dosierorgane von einem Ölmotor angetrieben werden, der nach dem Stromteilerventil angeordnet ist, erfolgt der Antrieb der Dosierorgane proportional zur Zapfwellendrehzahl und demzufolge proportional zur Fahrgeschwindigkeit innerhalb eines Getriebeganges des Ackerschleppers. Hierbei kann weiterhin vorgesehen sein, daß jeder Schleuderscheibe ein eigener Hydraulikmotor mit einem Stromregelventil zugeordnet ist, so daß sich die an einem Schleuderdüngerstreuer angeordneten Schleuderscheiben unabhängig voneinander und mit unterschiedlichen, jeweils konstanten Drehzahlen antreiben lassen, wodurch sich verschiedene Überlappungszonen und effektive Streubreiten der einzelnen Schleuderscheiben einstellen lassen. Hierdurch ist es möglich, eine optimale Anpassung an die jeweils zu bestreuende Fläche und/oder den jeweils vorherrschenden Einsatzbedingungen vorzunehmen.

In einer erfindungsgemäßen Ausführungsform ist vorgesehen, daß zumindest zwei einstellbare Stromteilerventile hintereinander angeordnet sind, daß der eine Teilstrom des ersten Stromteilerventils dem zweiten Stromteilerventil zugeführt wird, daß der andere Teilstrom des ersten Stromteilerventils in den Ölrücklauf geleitet wird, und daß an den beiden Ausgängen des zweiten Stromteilerventils jeweils ein Ölmotor angeschlossen ist. Infolge dieser Maßnahmen ist es möglich, für den Gebläseantrieb einen größeren Hydraulikmotor und für den Antrieb der Dosierelemente kleinere Hydraulikmotore zu benutzen. Der von der durch die Zapfwelle angetriebene Pumpe geförderte Volumenstrom wird hierdurch zunächst dem Hydraulikmotor des Gebläseantriebes zugeführt und dann vom ersten Stromteilerventil entsprechend reduziert, so daß dem zweiten Stromteilerventil ein geringerer Volumenstrom zugeführt wird, der dem Bauvolumen der Hydraulikmotore der Dosierelemente entspricht. Hierdurch wird sichergestellt, daß das Gebläse stets mit der für eine gleichmäßige Düngerverteilung notwendigen Gebläsedrehzahl, selbst bei einem Schwanken der Zapfwellendrehzahl des Ackerschleppers in einem bestimmten Bereich, antreibbar ist. Das zweite einstellbare Stromteilerventil steuert die Drehzahl der Hydraulikmotore, mit der die Dosierorgane angetrieben werden, derart, daß die Drehzahl der Dosierorgane proportional zur Zapfwellendrehzahl und damit auch proportional zur Fahrgeschwindigkeit innerhalb eines Getriebeganges des Ackerschleppers ist, so daß pro Flächeneinheit immer die gleiche, eingestellte Düngermenge ausgebracht wird.

Hierbei kann vorgesehen sein, daß die beiden Stromteilerventile über enei Steuerung miteinander derart verbunden sind, daß beide Stromteilerventile in Abhängigkeit voneinander verstellbar sind. Hierdurch ist es möglich, eine Veränderung der Ausbringmenge beider Dosierorgane gemeinsam oder unabhängig voneinander über eine Veränderung des den jeweiligen Hydraulikmotoren zugeführten Volumenstromes vorzunehmen. Somit läßt sich in einfacher Weise eine Veränderung der Ausbringmenge pro Flächeneinheit durchführen.

In einer Ausführungsform ist erfindungsgemäß vorgesehen, daß jedem Ölmotor ein einstellbares Stromregelventil zugeordnet ist. Hierdurch werden die Ölmotore unabhängig von der Zapfwellendrehzahl mit einem konstanten Volumenstrom versorgt, so daß die Drehzahl der von den Ölmotoren angetriebenen Antriebs-und Dosiersysteme konstant gehaltzn wird.

In einer besonders bevorzugten Ausführungsform zur Lösung der Aufgabe ist in erfindungsgemäßer Weise vorgesehen, daß vor dem ersten Ölmotor, bzw. dem ersten Stromregelventil ein Umschaltventil in dem Hydraulikkreislauf angeordnet ist, daß an dieses Umschaltventil eine in den Ölvorratsbehälter mündende Leitung angeschlossen ist, in welcher ein Drosselventil angeordnet ist. Infolge dieser Maßnahme wird auf einfachste Weise eine Möglichkeit zum Warmfahren des in dem geschlossenen Hydraulikkreislauf eines Schleuderdüngerstreuers oder Pneumatikdüngerstreuers sich befindlichen Hydrauliköles geschaffen, so daß die teueren Hydraulikmotore in bevorzugter Weise vor dem hohen Verschleiß durch das kalte Öl, das sehr zähflüssig ist, geschützt werden. Nach dem Erreichen der Betriebstemperatur des Öles weist dieses gute Verschleißschutzeigenschaften auf, so daß die Lebensdauer der Bauteile des geschlossenen Hydrauliksystems erheblich verlängert wird.

In einer weiteren Ausführungsform ist vorgesehen, daß vor dem ersten Ölmotor ein Umschaltventil in dem Hydraulikkreislauf angeordnet ist, daß an dieses Umschaltventil ein in den Ölvorratsbehälter mündende Leitung angeschlossen ist, und daß in dieser Leitung und/oder im Ölvorratsbehälter und/oder in der von dem Ölvorratsbehälter zu der Ölpumpe führenden Leitung ein oder mehrere Heizelemente, wie beispielsweise Heizspiralen angeordnet sind. Hierdurch erreicht das Öl in kürzester Zeit seine Betriebstemperatur bzw. wird es bereits auf der Transportfahrt zum Acker erwärmt, so daß beim Erreichen der zu bestreuenden Fläche sofort mit dem Düngerausbringen begonnen werden kann.

Um den geschlossenen Hydraulikkreislauf derart weiterzubilden, daß nach Erreichen der Betriebstemperatur des Öles der gesamte Hydraulikkreislauf vom Öl durchflossen wird, wodurch beispielsweise dann automatisch der Antrieb des Gebläses erfolgt und dem Schlepperfahrer so die Betriebsbereitschaft des Düngerstreuers signalisiert wird, ist erfindungsgemäß vorgesehen, daß in dem Ölvorratsbehälter oder in der vom Vorratsbehälter zur Ölpumpe führenden Leitung oder in der vom Ölmotor zum Umschaltventil oder in der vom Umschaltventil zum Ölvorratsbehälter führenden Leitung ein Temperaturfühler angeordnet ist. Hierbei ist weiterhin vorgesehen, daß mit dem Temperaturfühler ein Schalter verbunden ist, daß das Umschaltventil einen Umschalter aufweist und daß der Schalter mit dem Umschalter verbunden ist, ohne das weder Stromteilerventile noch Stromregelventile eingesetzt werden müssen.

In einer anderen Ausführungsform ist vorgesehen, daß die Ölmotore für den Antrieb der Dosierwalzen als Verstellmotore ausgebildet sind. Mittels dieser Verstellmotore läßt sich die Ausbringmenge pro Flächeneinheit durch Veränderung des Schluckvolumens auf einfache Weise einstellen.

Weitere Einzelheiten der Erfindung sind der Beispielsbeschreibung und den Zeichnungen zu entnehmen. Hierbei zeigen

Fig. 1 einen Hydraulikschaltplan für einen Pneumatikdüngerstreuer mit einem einstellbaren Stromteilerventil vor dem Antriebsmotor für die Dosierorgane,

Fig. 2 einen anderen Hydraulikschaltplan eines Pneumatikdüngerstreuers mit zwei einstellbaren Stromteilerventilen vor den Ölmotoren für den Dosierorganantrieb,

Fig. 3 ein weiterer Hydraulikschaltplan eines Pneumatikdüngerstreuers, wobei jedem Ölmotor für den Antrieb der Dosierorgane ein einstellbares Stromteilerventil zugeordnet ist,

Fig. 4 ein weiterer Hydraulikschaltplan eines Pneumatikdüngerstreuers, wobei jedem Ölmotor für den Dosierorganantrieb jeweils ein einstellbares Stromregelventil zugeordnet ist,

Fig. 5 ein weiterer Hydraulikschaltplan eines Pneumatikdüngerstreuers, wobei die Ölmotore für den Antrieb der Dosierorgane als Verstellmotore ausgebildet sind,

Fig. 6 ein weiterer Hydraulikschaltplan für einen Pneumatikdüngerstreuer mit einem vor dem ersten Ölmotor angeordneten Drosselventil und

Fig. 7 der Hydraulikschaltplan gemäß Fig. 6, wobei das Drosselventil gegen ein Heizelement ausgetauscht ist.

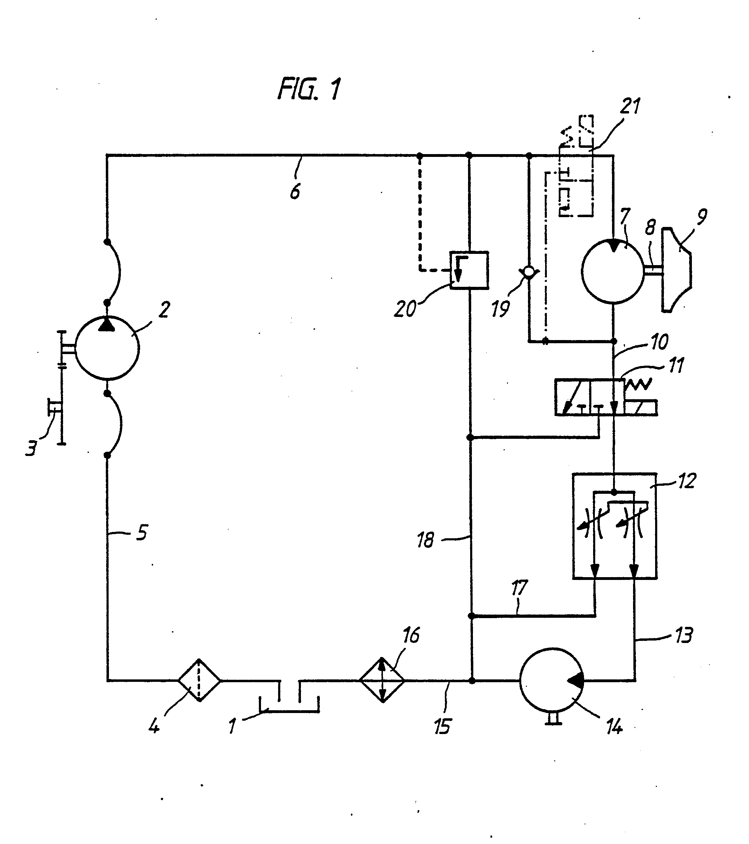

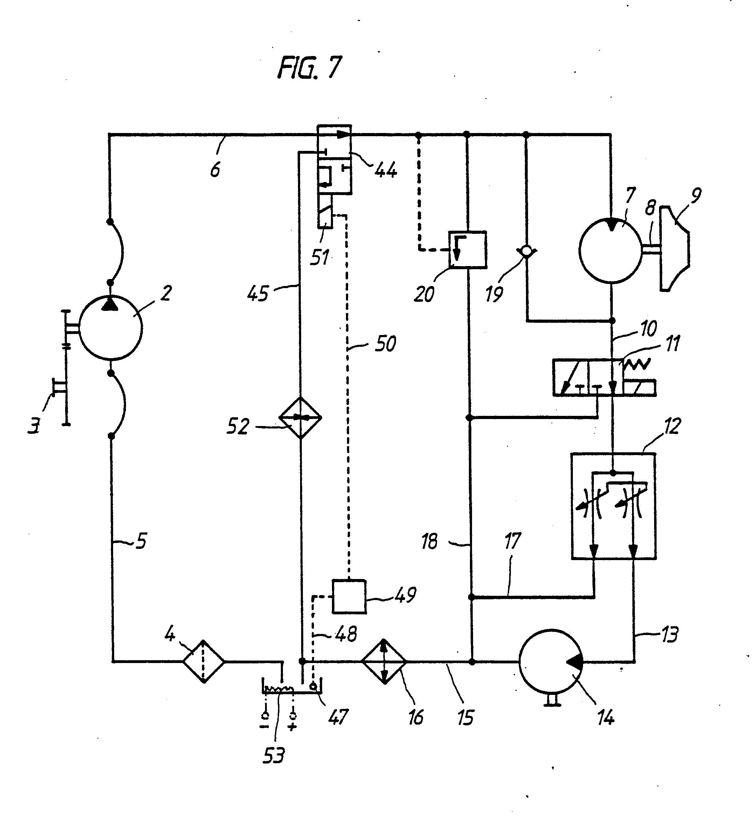

Die dargestellten verschiedenen Hydraulikschaltpläne stellen ein geschlossenes Hydrauliksystem dar und bilden die bordeigene Hydraulikanlage eines nicht abgebildeten Pneumatikdüngerstreuers. Mittels dieser bordeigenen Hydraulikanlage ist es möglich, gleichzeitig den hydraulischen Gebläseantrieb und die Hydraulikmotore für die Dosierorgane anzutreiben, da die Hydraulikmotore für das Gebläse und Dosierwalzen hintereinander geschaltet sind. Die in den Fig. 1 bis 7 dargestellten Hydraulikschaltpläne unterscheiden sich nur in der Art und Weise, wie den den Dosierorganen zugeordneten Ölmotoren das Hydrauliköl zugeführt wird.

Dieses bordeigene Hydrauliksystem eines Pneumatikdüngerstreuers weist einen Ölvorratsbehälter 1 auf, aus dem die Zapfwellenaufsteckpumpe 2, die auf die Zapfwelle 3 des nicht dargestellten Ackerschleppers aufgesteckt wird, das Hydrauliköl über das Ölfilter 4 und die Leitung 5 ansaugt. Über die Leitung 6 gelangt das von der Pumpe 2 geförderte Hydrauliköl zu dem Hydraulikmotor 7, der auf der Antriebswelle 8 des Gebläses 9 befestigt ist und das Gebläse 9 antreibt . Das den Hydraulikmotor 7 durchflossene Hydrauliköl gelangt über die Leitung 10 zu dem 2/3 Wegeventil 11. Befindet sich das Wegeventil 11 in der in der Fig. 1 dargestellten Position, gelangt das Hydrauliköl zu dem einstellbaren Stromteilerventil 12, in dem der von der Pumpe 2 geförderte Volumenstrom des Hydrauliköls in genau einstellbarer Weise aufgeteilt wird. Das über die Leitungen 13 geförderte Öl treibt den Hydraulikmotor 14 an, der die beiden, an einem Pneumatikdüngerstreuer angeordneten Dosierwalzen derart antreibt, daß die Dosierwalzen mit der gleichen Drehzahl rotieren. Über die Rücklaufleitung 15 und den Ölkühler 16 gelangt das Hydrauliköl wieder in den Ölvorratsbehälter 1. Das im Stromteilerventil 12 über die Leitung 17 abgeleitete und nicht für den Antrieb des Hydraulikmotors 14 benötigte Hydrauliköl wird über die Rückstromleitung 18 der Rücklaufleitung 15 zugeführt und gelangt so in den Ölvorratsbehälter 1. Damit das mit hohen Drehzahlen rotierende Gebläse 9 nach Abschalten der Zapfwelle 3 nachlaufen kann, befindet sich in einer Parallelschaltung zu dem Hydraulikmotor 7 das Rückschlagventil 19. Kommt es nun aus irgendeinem Grunde zu einem Druckanstieg in den Druckleitungen des Hydrauliksystem, baut sich dieser über das Druckbegrenzungsventil 20 ab. Zur Durchführung einer sog. Abdrehprobe kann es evtl. sinnvoll sein, den Antrieb des Gebläses 9 zu unterbrechen, wobei die Ölzufuhr zu dem Hydraulikmotor 7 mittels des mit strichpunktierten Linien dargestellten Wegeventiles 21 um den Hydraulikmotor 7 herumgelenkt wird.

Der Einsatz des Stromteilerventiles 12 gemäß Fig. 1 ist notwendig, da die Hydraulikmotore 7 und 14 unterschiedliche Schluckvolumen aufweisen. Dem Hydraulikmotor 7 muß ein wesentlich größerer Volumenstrom zugeführt werden, als dem Hydraulikmotor 14. Aus diesem Grunde ist es notwendig, den Volumenstrom vor dem Hydraulikmotor 14 aufzuteilen. Der Antrieb des die Dosierorgane antreibenden Hydraulikmotors 14 ist durch die Anordnung des Stromteilerventiles 12 proportional zur Zapfwellendrehzahl des den Pneumatikdüngerstreuer transportierenden Ackerschleppers innerhalb eines Schleppergetriebeganges. Hierdurch erfolgt ein Ausbringen des Mineraldüngers proportional zur Fahrgeschwindigkeit, so daß die über eine Verstellung des einstellbaren Stromteilerventils eingestellte, gewünschte Streumenge pro Flächeneinheit genau eingehalten wird.

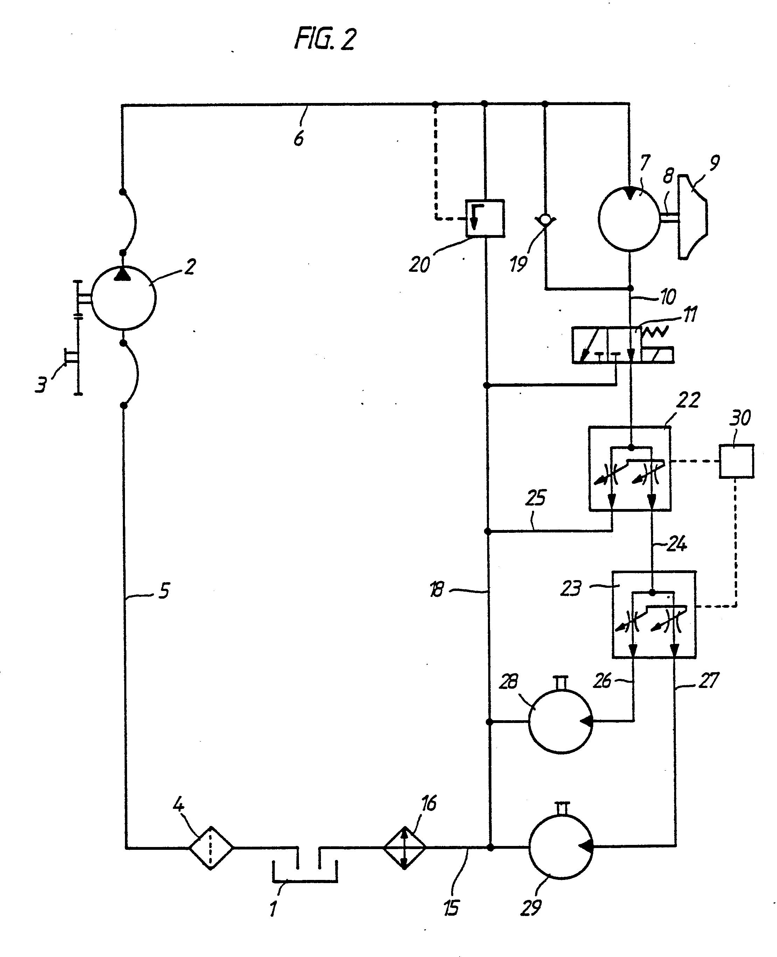

Die Fig. 2 zeigt einen Hydraulikschaltplan, wobei das einstellbare Stromteilerventil 12 gemäß Fig. 1 durch die beiden einstellbaren Stromteilerventile 22 und 23 ersetzt worden sind. Diese einstellbaren Stromteilerventile 22 und 23 sind derart hintereinander angeordnet, daß der Teilstrom 24 des ersten Stromteilerventiles 22 dem zweiten Stromteilerventil 23 zugeführt wird, wobei der Teilstrom 25 des ersten Stromteilerventiles 22 über die Rückstromleitung 18 in den Ölrücklauf 15 geleitet wird. An den beiden Ausgängen 26 und 27 des zweiten Stromteilerventiles 23 ist jeweils ein Ölmotor 28 und 29 angeordnet. Diese beiden Ölmotore 28 und 29 treiben jeweils eine Dosierwalze des Pneumatikdüngerstreuers an. Über die Steuerung 30 sind die beiden einstellbaren Stromteilerventile 22 und 23 derart miteinander verbunden, daß Sie in Abhängigkeit voneinander verstellbar sind. Ein Verstellen des Stromteilerventiles 22 führt zu einer Veränderung des dem zweiten Stromteilerventil 23 zugeführten Volumenstromes über den Teilstrom 24, so daß dem Stromteilerventil 23 eine andere Ölmenge zugeführt wird. Diese Volumenstromänderung führt zur gemeinsamen Veränderung der Drehzahl, der von den Hydraulikmotoren 28 und 29 angetriebenen Dosierorgane, was eine Veränderung der Ausbringmenge bewirkt. Mittels des Stromteilerventiles 22 läßt sich also eine gemeinsame Veränderung der Drehzahl der den Ölmoten 28 und 29 zugeordneten Dosierorgane bewirken. Am Stromteilerventil 23 läßt sich jeweils der den Ölmotoren 28 und 29 zugeführte Volumenstrom einstellen, so daß sich die Drehzahl dieser beiden Hydraulikmotore 28 und 29 getrennt und unabhängig voneinander einstellen läßt. Somit ist es möglich, daß sich über die den Hydraulikmotoren 28 und 29 jeweils zugeordneten Dosierorgane unterschiedlicher Ausbringmengen ausbringen lassen.

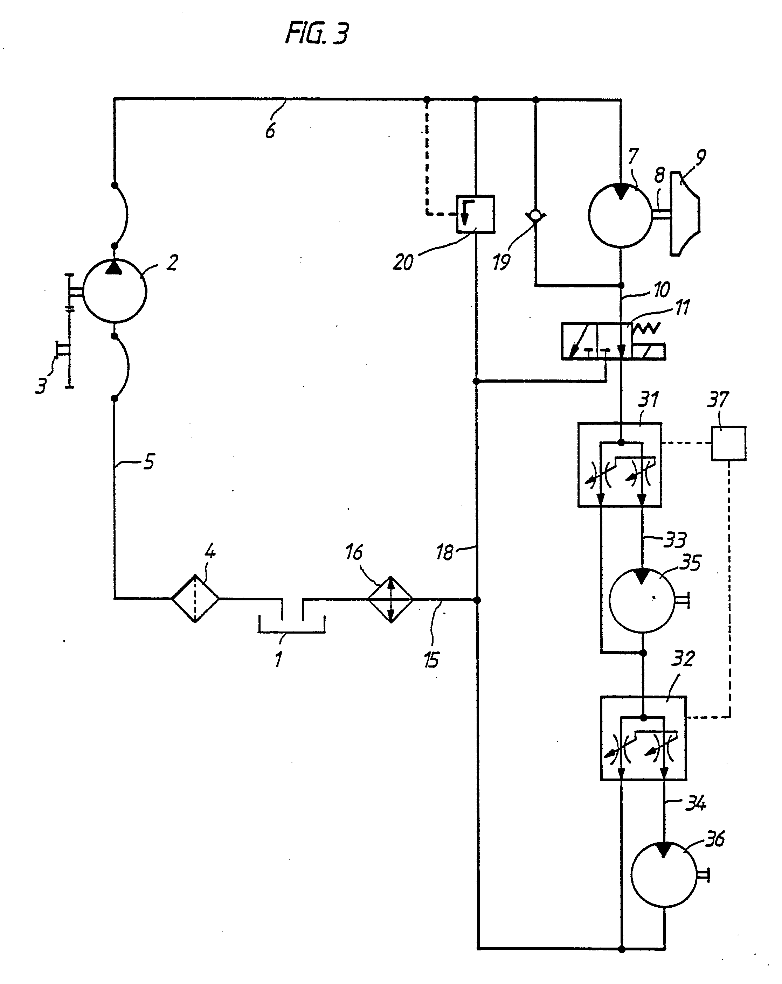

Die Fig. 3 zeigt einen Hydraulikschaltplan, wobei nach dem Wegeventil 11 zwei Stromteilerventile 31 und 32 derart angeordnet sind, daß an jedem Ausgang 33 und 34 des jeweiligen Stromteilerventiles 31 und 32 jeweils ein Ölmotor 35 und 36 angeschlossen ist. Diese Ölmotore 35 und 36 betreiben jeweils ein Dosierorgan oder eine Gruppe von Dosierorganen an. Über die Steuerung 37 sind die Stromteilerventile 31 und 32 jeweils einzeln oder in Abhängigkeit voneinander verstellbar. Eine Veränderung der Drehzahl des Hydraulikmotors 35 über eine Änderung des diesem Motor zugeführten Volumenstromes bewirkt keine Veränderung der Drehzahl des Motors 36. Mit dieser Anordnung ist es möglich, sowohl eine gemeinsame als auch eine einzelne Veränderung der Drehzahl der Ölmotore 35 und 36 herbeizuführen, so daß das dem jeweiligen Ölmotor 35 oder 36 zugeordnete Dosierorgan mit der gleichen oder mit unterschiedlichen Drehzahlen antreibbar ist.

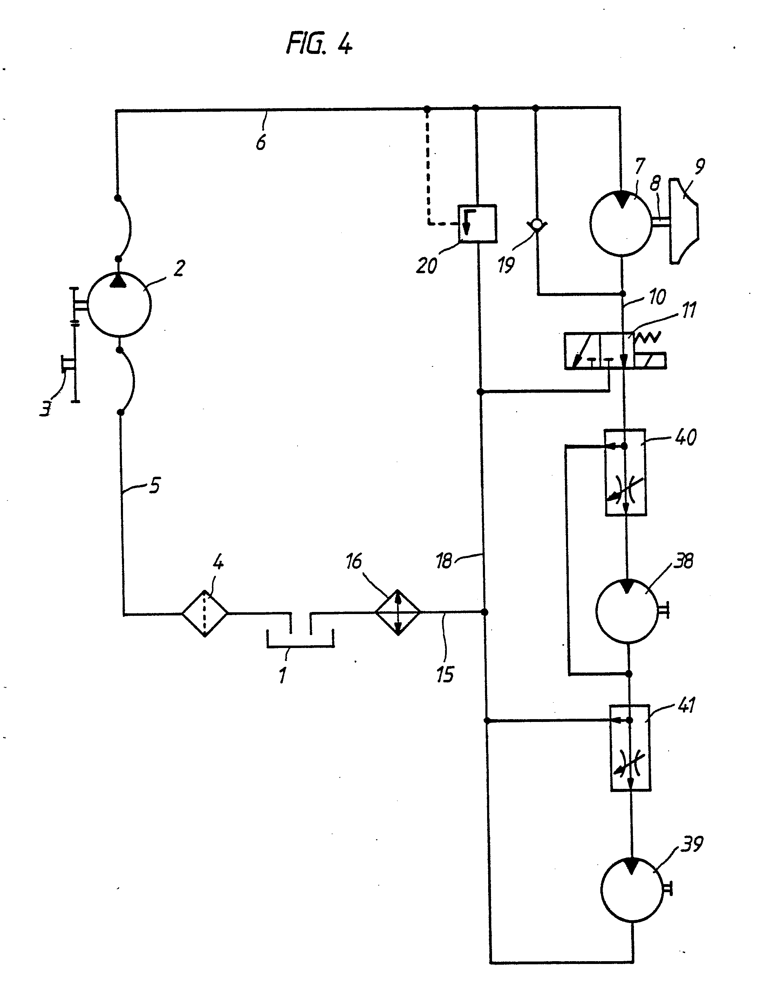

Die Fig. 4 zeigt einen Hydraulikschaltplan, wobei jedem Ölmotor 38 und 39 jeweils ein einstellbares Stromregelventil 40 und 41 zugeordnet ist. Hierdurch werden die Ölmotore 38 und 39 unabhängig von der Zapfwellendrehzahl mit einem konstanten Volumenstrom versorgt, so daß die Drehzahl der von den Ölmotoren 38 und 39 angetriebenen Dosierorgane konstant gehalten wird. Die Dosierung des Mineraldüngers über die mit den Ölmotoren 38 und 39 verbundenen Dosierorgane erfolgt hierbei nicht proportional zur Fahrgeschwindigkeit.

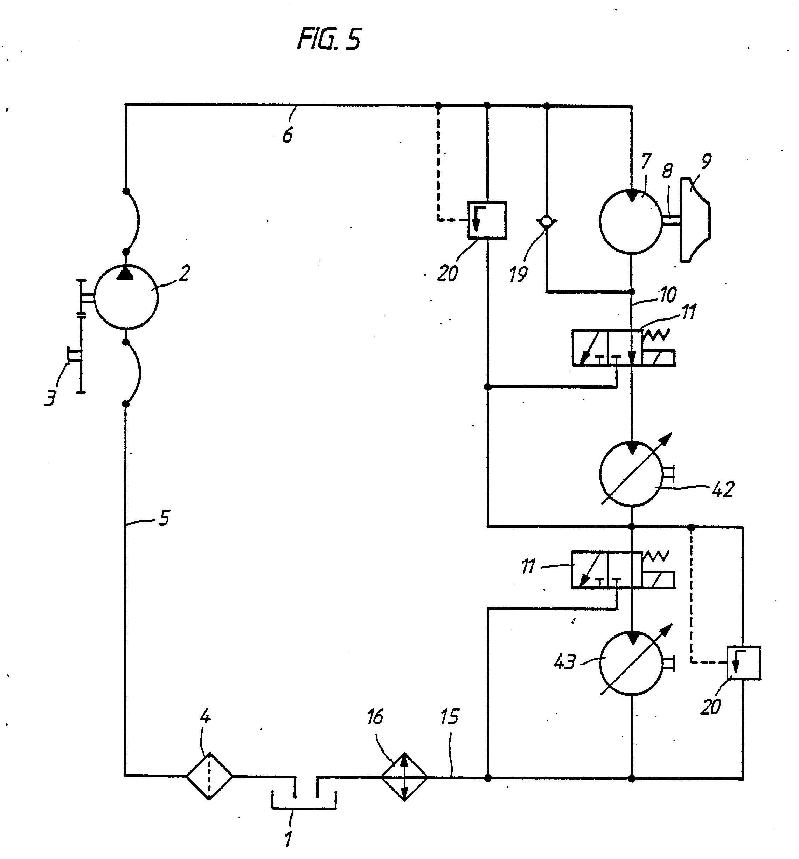

Der Hydraulikschaltplan gemäß Fig. 5 weist für den Antrieb der Dosierorgane jeweils die beiden als Verstellmotore ausgebildeten Ölmotore 42 und 43 auf. Durch eine Veränderung des Schluckvolumens der Verstellmotore 42 und 43 wird die Drehzahl, mit der die Dosierorgane von diesen Motoren angetrieben werden, eingestellt.

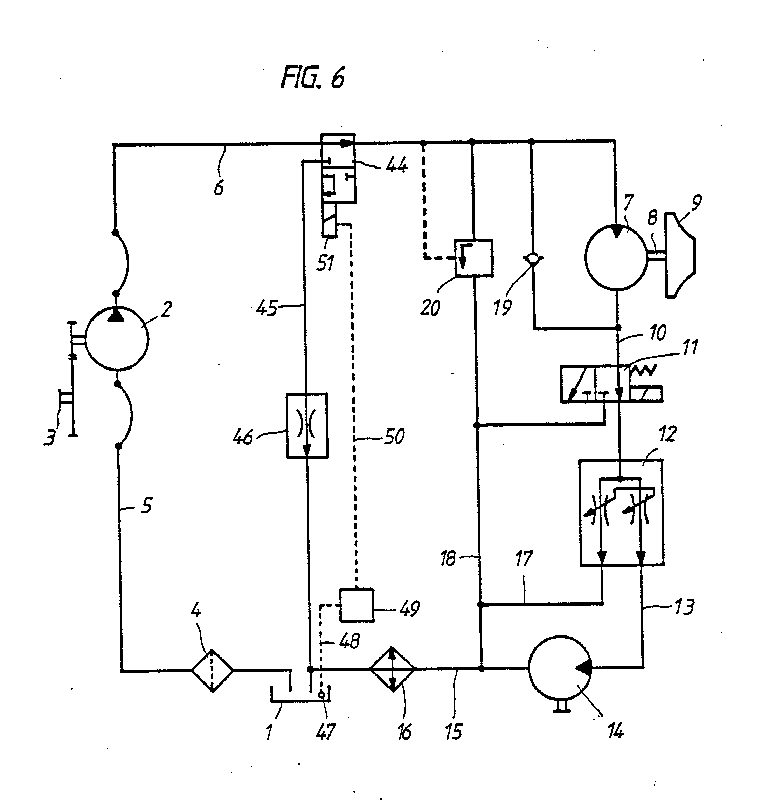

Die Fig. 6 zeigt den Hydraulikschaltplan gemäß Fig. 1, wobei vor dem ersten Ölmotor 7 ein Umschaltventil 44 in dem Hydraulikkreislauf angeordnet ist. Dieses Umschaltventil 44 befindet sich in der Leitung 6 und ist mit der in den Ölvorratsbehälter 1 mündenden Leitung 45 verbunden. In dieser Leitung 45 ist das Drosselventil 46 montiert. In dem Ölvorratsbehälter 1 befindet sich der Temperaturfühler 47, der über die Stromleitung 48 mit dem Schalter 49 verbunden ist. Dieser Schalter 49 ist wiederum über die elektrische Leitung 50 mit dem Umschalter 51, der an dem Umschaltventil 44 angeordnet ist, verbunden. Der Temperaturfühler 47 mißt die Temperatur des sich im Ölvorratsbehälter 1 befindlichen Öles und nimmt entsprechend der Öltemperatur eine Verstellung des Umschaltventiles 44 vor. D.h., zu Beginn des Ausstreuvorganges, wenn das sich im Ölvorratsbehälter 1 befindliche Öl noch kalt ist, wird das Ventil 44 derart verstellt, daß der von der Zapfwellenaufsteckpumpe 2 geförderte Volumenstrom über die Leitung 45 und das Drosselventil 46 in den Ölvorratsbehälter 1 gelangt. Dadurch, daß das Öl durch das Drosselventil 46 hindurchfließen muß, kommt es zu einer sehr raschen Erwärmung des Hydrauliköls des geschlossenen Hydraulikkreislaufes, so daß das sich im Ölvorratsbehälter 1 befindliche Öl sehr rasch seine Betriebstemperatur erreicht. Das Erreichen der Betriebstemperatur wird von dem Temperaturfühler 47 erfaßt, und an den Schalter 49 weitergeleitet, was zu einer Verstellung des am Umschaltventil 44 angeordneten Umschalters 51 führt. Nach Erreichen der Betriebstemperatur des Hydrauliköls nimmt das Umschaltventil die in Fig. 6 wiedergegebene Position ein, so daß die entsprechenden Hydraulikmotore mit Öl beaufschlagt werden.

Nun ist es aber auch möglich, das Drosselventil 46 gemäß Fig. 6 durch eine Ölheizung 52 zu ersetzen. Weiterhin ist es denkbar, in dem Ölvorratsbehälter 1 eine Heizspirale 53 zu installieren, die das kalte Hydrauliköl erwärmt und sich anschließend, nachdem das Hydrauliköl seine Betriebstemperatur erreicht hat, abschaltet.

## Ansprüche

1. Hydraulikanlage für den Antrieb eines Streugerätes, insbesondere eines landwirtschaftlichen Düngerstreuers, mit einer von der Zapfwelle des Ackerschleppers angetriebenen Ölpumpe, die zumindest zwei unabhängig voneinander arbeitende und regelbare Ölmotore antreibt, die die Verteilorgane, wie beispielsweise Wurforgane und den Dosiermechanismus antreiben, wobei zumindest einer der Ölmotore von einem einstellbaren Stromregelventil und/oder Stromteilerventilen regelbar ist dadurch gekennzeichnet, daß hinter dem(n) Stromteilerventil(en) (12,22,23,31,32) zumindest zwei Ölmotore (14,28,29,35,36) angeordnet sind, daß an jedem Ausgang (13,26,27,33,34) des Stromteilerventils (12,22,23,31,32) zumindest ein Ölmotor (14,28,29,35,36) angeschlossen ist, und daß jeder Ölmotor (14,28,24,35,36) ein Dosierorgan oder eine Gruppe von Dosierorganen antreibt.

2. Hydraulikanlage nach Anspruch 1, dadurch gekennzeichnet, daß der (die) vor dem(n) Stromregelventil(en) (40,41) oder dem(n) Stromteilerventil(en) (12,22,23,31,32) angeordnete(n) Ölmotor(e) zumindest ein Gebläse (9) antreibt.

3. Hydraulikanlage nach Anspruch 1, dadurch gekennzeichnet, daß zwischen dem ersten Stromregelventil und dem Stromteilerventil zumindest ein Ölmotor angeordnet ist, der zwei oder mehrere Schleuderscheiben antreibt.

4. Hydraulikanlage nach Anspruch 3, dadurch gekennzeichnet, daß jeder Schleuderscheibe ein eigener Ölmotor (38,39) mit einem Stromregelventil (40,41) zugeordnet ist.

5. Hydraulikanlage nach Anspruch 1, dadurch gekennzeichnet, daß zumindest zwei einstellbare Stromteilerventile (22,23) hintereinander angeordnet sind, daß der eine Teilstrom (24) des ersten Stromteilerventils (22) dem zweiten Stromteilerventil (23) zugeführt wird, daß der andere Teilstrom (25) des ersten Stromteilerventils (22) in den Ölrücklauf (18) geleitet wird, und daß an den beiden Ausgängen (26,27) des zweiten Stromteilerventils (23) jeweils ein Ölmotor (28,29) angeschlossen ist.

6. Hydraulikanlage nach Anspruch 5, dadurch gekennzeichnet, daß die beiden Stromteilerventile (22,23) über eine Steuerung (30) miteinander derart verbunden sind, daß beide Stromteilerventile (22,23) in Abhängigkeit voneinander verstellbar sind.

7. Hydraulikanlage insbesondere nach Anspruch 1, dadurch gekennzeichnet, daß jedem Ölmotor (14,28,29,35,36,38,39) ein einstellbares Stromregelventil (40,41) zugeordnet ist.

8. Hydraulikanlage für den Antrieb eines Streugerätes, insbesondere eines landwirtschaftlichen Düngerstreuers, mit einer von der Zapfwelle des Ackerschleppers angetriebenen Ölpumpe, die zumindest einen regelbaren Ölmotor antreibt, der ein Gebläse oder die Verteilorgane und den Dosiermechanismus antreiben, wobei zumindest einer der Ölmotore von einem einstellbaren Stromregelventil und/oder Stromteilerventilen regelbar ist, insbesondere nach Anspruch 1, dadurch gekennzeichnet, daß vor dem ersten Ölmotor (7) bzw. dem ersten Stromregelventil oder Stromteilerventil ein Umschaltventil (44) in dem Hydraulikkreislauf angeordnet ist, daß an dieses Umschaltventil (44) eine in den Ölvorratsbehälter (1) mündende Leitung (45) angeschlossen ist, in welcher ein Drosselventil (46) angeordnet ist.

9. Hydraulikanlage für den Antrieb eines Streugerätes, insbesondere eines landwirtschaftlichen Düngerstreuers, mit einer von der Zapfwelle des Ackerschleppers angetriebenen Ölpumpe, die zumindest einem regelbaren Ölmotor antreibt, der ein Gebläse oder die Verteilorgane und den Dosiermechanismus antreiben, wobei zumindest einer der Ölmotore von einem einstellbaren Stromregelventilen und/oder Stromteilerventilen regelbar ist, insbesondere nach Anspruch 1, dadurch gekennzeichnet, daß vor dem ersten Ölmotor (7) ein Umschaltventil (44) in dem Hydraulikkreislauf angeordnet ist, daß an dieses Umschaltventil (44) eine in den Ölvorratsbehälter (1) mündende Leitung (45) angeschlossen ist, und daß in dieser Leitung (45) und/oder im Ölvorratsbehälter (1) und/oder in der von dem Ölvorratsbehälter (1) zu der Ölpumpe (2) führenden Leitung (5) ein oder mehrere Heizelemente(46,52) , wie beispielsweise Heizspiralen angeordnet sind.

10. Hydraulikanlage nach Anspruch 8 oder 9, dadurch gekennzeichnet, daß in dem Ölvorratsbehälter (1) oder in der vom Vorratsbehälter (1) zur Ölpumpe (2) führenden Leitung oder in der von der Ölpumpe (2) zum Umschaltventil (44) führenden Leitung (6) oder in der vom Umschaltventil (44) zum Ölvorratsbehälter (1) führenden Leitung (45) ein Temperaturfühler (47) angeordnet ist.

11. Hydraulikanlage nach Anspruch 10, dadurch gekennzeichnet, daß mit dem Temperaturfühler (47) ein Schalter (49) verbunden ist, daß das Umschaltventil (44) einen Umschalter (51) aufweist und daß der Schalter (49) mit dem Umschalter (51) verbunden ist.

12. Hydraulikanlage nach Anspruch 1, dadurch gekennzeichnet, daß die Ölmotore (42,43) für den Antrieb der Dosierwalzen als Verstellmotore ausge- bildet sind.

## FIG. 1

AMAZONEN-WERKE H.DREYER GmbH & Co.KG

# FIG. 2

AMAZONEN-WERKE  H.DREYER  GmbH & Co.KG

FIG. 3

AMAZONEN-WERKE  H.DREYER  GmbH & Co.KG

# FIG. 4

FIG. 5

AMAZONEN-WERKE  H.DREYER  GmbH & Co.KG

# FIG. 6

AMAZONEN-WERKE H.DREYER GmbH & Co.KG

## FIG. 7

AMAZONEN-WERKE  H.DREYER  GmbH & Co.KG